# EUROPEAN PATENT SPECIFICATION

(11) **EP 2 405 545 B1**
(45) Date of publication and mention of the grant of the patent: **14.12.2016**
(21) Application number: 10168744.0
(22) Date of filing: 07.07.2010
(51) Int. Cl.: H02B 11/24, H02B 11/12

(54) **Shutter device and switchgear apparatus using such shutter device**
Verschlussvorrichtung und Schaltanlagenapparatur mit der Verschlussvorrichtung
Dispositif obturateur et appareil de commutation utilisant ce dispositif obturateur

(43) Date of publication of application: 11.01.2012
(73) Proprietor: ABB Technology AG, 8050 Zürich (CH)
(72) Inventor: Carelli, Vittorio, 26900, Lodi (IT); Franco, Walter-Salvatore, 24100, Bergamo (IT)
(74) Representative: De Santis, Giovanni

(56) References cited:
- JP-A- 54 050 937
- US-A- 1 810 694
- US-A- 3 213 222
- US-A- 3 610 850
- US-A- 3 614 350

## Description

The present invention relates to a shutter device for a switchgear apparatus, and switchgear apparatus using such shutter device. In particular, the shutter device is suitable for being connected to switchgear apparatus having a circuit breaker unit of the draw-out or withdrawable type which is housed in a switchgear casing. The shutter device according to the invention is configured to automatically screen electric contacts so as to reliably and effectively protect operating or maintenance personnel who may have to enter the switchgear casing.

The shutter device is particularly suitable to be used in the Medium Voltage field, where, for the purposes of the present application, the term Medium Voltage refers to applications in the range of between 1 kV and some tens of kV, for example 30 kV.

A shutter device for switchgear is known, comprising a shutter panel which is movable from a non-protective raised position to a protective lowered position by vertically sliding along a pair of opposite and parallel guide elements fixed to a stationary frame of a switchgear casing. The switchgear comprises a circuit breaker unit which is supported by a trolley or truck slidable along stationary horizontal rails.

The trolley, which is coupled to a worm-screw drivable by a handle or tool, can be moved from an extraction position with respect to the switchgear casing, in which movable electric contacts fixed to the breaker unit are disengaged from stationary contacts included in the switchgear, to an insertion position in the switchgear casing, in which the movable electric contacts engage with the respective stationary electric contacts. In the non-protective raised position, suitable passage openings provided on the shutter panel are positioned so as to enable the movable electric contacts to pass there through so as to couple with the respective stationary electric contacts. When the breaker unit is withdrawn in the extraction position, the shutter panel is displaced in the protective lowered position, so that closed zones thereof cover the stationary electric contacts thus preventing access to the latter.

The shutter device is provided with a lever mechanism comprising two levers for driving the shutter panel upon a movement of the movable breaker unit. The two levers are arranged parallel to one other and at opposite lateral sides with respect to the breaker unit. A first end of each lever is connected to the shutter panel and a second end of each lever is pivotally connected to a stationary hinge provided on the switchgear casing. Each lever has an external lower side surface defining a cam profile and intended to rest on a respective fulcrum arranged below which is fixed to a lateral wall of the breaker unit device. Each lever has a cross-section which varies along a longitudinal extent of the lever so as to properly define the above mentioned cam profile. The levers may be configured as compact rods having portions with different thickness, or as tubular bar sections having different cross-section values along the longitudinal extent of the lever.

The cam profile, subject to the action received from the respective fulcrum being in movement integrally with the breaker unit, causes the lever to pivot around the respective stationary hinge, thus raising or lowering the shutter panel respectively in the non-protective or protective position.

A drawback of the known shutter device above discussed is that it is not sufficiently reliable and safe for the following reasons. In the known shutter device, a force of unilateral type occurs between each lever and the respective fulcrum. In other words, each lever is only prevented from freely rotating downwards by the respective fulcrum but it is not prevented from rotating upwards by the latter. This means that a rash operator could have the possibility to manually raise the levers and thus the shutter panel even if the breaker unit is in the extraction position, thus dangerously accessing to the stationary electric contacts.

Furthermore, if the shutter panel gets jammed or blocked in the non protective raised position, for example due to a poor lubrication of the two guide elements or to dust seeping in the latter, the two levers are not able to follow the respective fulcrums during extraction movement of the breaker unit. In other words, the fulcrums get detached from the levers and mutual contact thereof is no longer ensured. Without such a mutual contact, control of the movement of the levers is lost thus resulting in an unreliable driving of the shutter panel. This may jeopardize safety of the operating or maintenance personnel.

Another drawback of known shutter devices is that they are not very simple and cheap to manufacture, since rather thick levers are required in order to have a sufficiently high mechanical stiffness thus ensuring a precise movement of the shutter panel. In other words, the levers should not flex in order to provide as much as possible a precise vertical movement of the shutter panel. Therefore, heavy and expensive compact rods should be machined, through burdensome and expensive manufacturing processes, so as to provide the required cam profile.

In alternative to the compact and heavy rods, tubular section bars may be machined for obtaining the levers. However such tubular section bars, in order to be highly stiff, have a rather large cross-section and thus, in order to be able to operate, require a not negligible gap between the lateral walls of the breaker unit and the switchgear casing lateral walls. This implies significant overall dimensions of the switchgear apparatus.

Patent US 3,610,850 discloses a shutter arrangement for a switchgear comprising a shutter panel, a cam plate having a cam slot which receives a pin or roller fixed on the side of a circuit breaker; the cam plate is connected to an actuating mechanism adapted to move the shutter panel. When the circuit breaker slides, the pin moves inside the cam slot and causes the movement of the cam plate. The cam plate transmits the movement to the actuating mechanism which in turn causes the movement of the shutter panel.

Patent document JP54050937 discloses a movable circuit breaker which is provided with a roller suitable to act on an external cam profile of an associated lever. The lever is in turn coupled with a slider which is operatively coupled to a shutter panel. When the circuit breaker is moved, the roller acts on the lever causing its movement and in the end the movement of the shutter panel through the slider.

Patent US 3,614,350 discloses a cam plate which comprises an open ended cam slot that is adapted to receive a pin or roller fixed on one side of a circuit breaker. The cam plate is connected to an actuating mechanism suitable for moving the shutter; when the circuit breaker moves, the pin enters into the cam slot and causes the movement of the cam plate which in turn transmits the movement to the actuating mechanism. In the end, the actuating mechanism causes the movement of the shutter.

Patent US 3,213,222 discloses a shutter, a movable circuit breaker comprising a roller, and an associated lever which comprises an external shape with a curved cam profile and a flat cam profile. When the circuit breaker is moved, the roller bears on the external cam profiles of the lever thus causing the lever to move and in the end, to cause the movement of the shutter.

Patent US 1,810,694 discloses a switch mechanism comprising a lever provided with an external curved portion, a movable structure provided with terminals and a roller which is devoted to engage with the lever, and helical strips suitable to shield terminals which can be coupled with the terminals of the movable structure. When the structure moves, the roller bears against the external profile of the lever causing its movement; in turn, the lever causes the rotation of the helical strips.

An object of the invention is to improve shutter devices for switchgear.

A further object of the invention is to provide a shutter device which is very reliable and safe.

A still further object of the invention is to provide a shutter device which is structurally simplified and cheap to manufacture.

A still further object of the invention is to provide a shutter device which enables to reduce the overall dimensions of the switchgear apparatus.

According to the invention, there is provided a shutter device as defined in claim 1.

Characteristics and advantages of the invention will result from the description and from claims.

The invention can be better understood and implemented with reference to the attached drawings that illustrate some embodiments thereof by way of non-limiting example, in which:
Figure 1 is a perspective view of part of switchgear comprising the shutter device according to the invention, in a protective configuration;
Figure 2 is a further perspective view of the switchgear of Figure 1 but in a non-protective configuration;
Figure 3 is a perspective view of the shutter device of the invention and part of a switchgear casing in the protective configuration;
Figure 4 is a perspective view of the shutter device in the non-protective configuration;
Figures 5 and 6 are respectively a further perspective view and a side view of the shutter device in the protective configuration;
Figures 7 and 8 are views like the ones in Figures 5 and 6, in which only some details are shown;
Figures 9 and 10 are further perspective and side view of the shutter device in the non-protective configuration;
Figures 11 and 12 are views like the ones in Figures 9 and 10, in which only some details are shown;
Figure 13 is a section view of Figure 6, taken along the plane XIII-XIII;
Figure 14 is a section view of Figure 10, taken along the plane XIV-XIV.

With reference to the attached Figures, a shutter device 1 is shown which can be used, in a non-limitative way, in Medium Voltage panels, indicated also as switchboards or switchgear, or in connection with other Medium Voltage apparatuses. The shutter device 1 is particularly suitable to be used in the Medium Voltage field, i.e. for applications in the range of between 1 KV and some tens of kV, e.g. 30 kV.

The shutter device 1 according to the invention is configured to automatically screen electric contacts so as to reliably and effectively protect operating or maintenance personnel who may have to enter the switchgear casing.

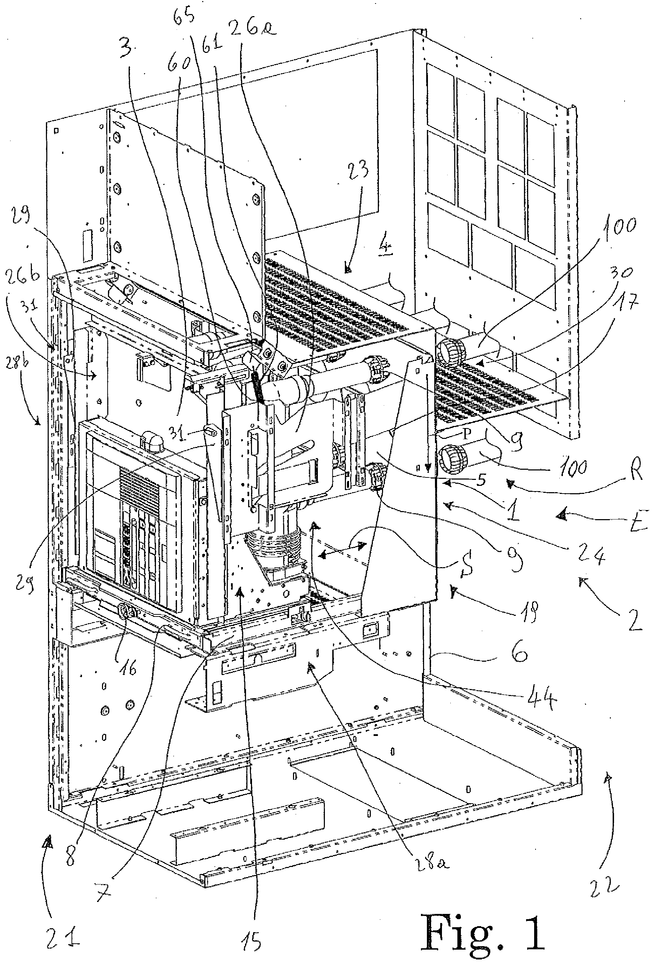

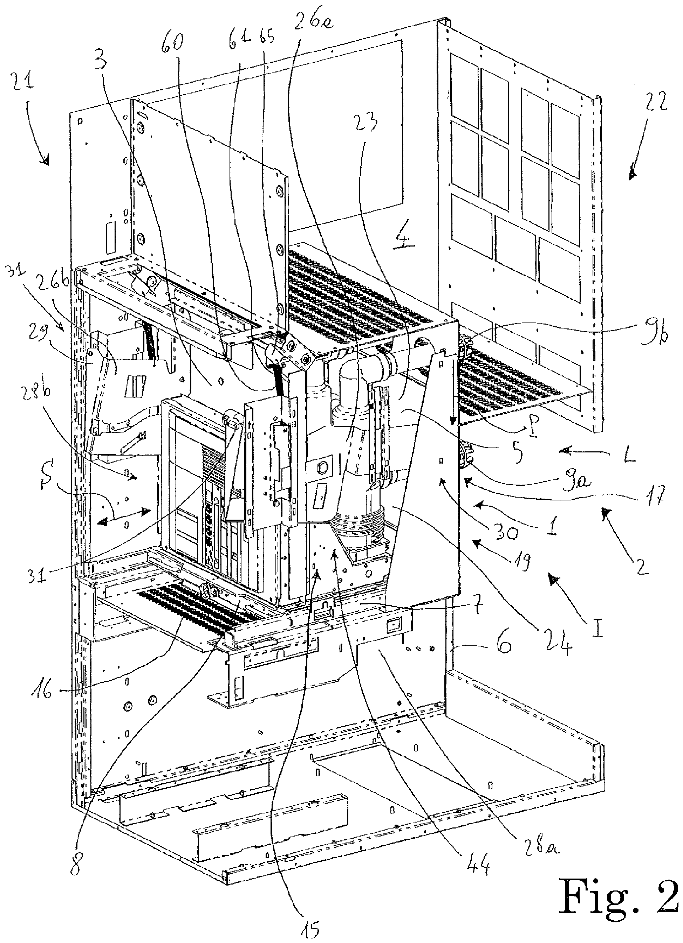

In particular, the shutter device 1 is suitable for being used with switchgear apparatus 2 having a circuit breaker unit 3 of the draw-out or withdrawable type which is housed in a switchgear casing or cabinet 4 (shown in Figures 1 and 2). The switchgear casing 4 comprises a supporting frame 6 and has a front portion 21, accessible to an operator, and a rear portion 22.

The circuit breaker unit 3 is mounted on a trolley or truck 8 which is slidable in a direction S towards and away from the rear portion 22. The trolley 8 slides along two rail bars 7, which are fixed for example to the supporting frame 6.

On the circuit breaker unit 3 there are provided electrical contacts 9, in particular lower electrical contacts 9a, and upper electrical contacts 9b, arranged for cooperating respectively with stationary lower electrical contacts and stationary upper electrical contacts schematically illustrated only in figure by the reference number 100. Such stationary contacts, which are usually positioned inside the switchgear casing 4 or close to, are suitable for allowing an electrical connection on one side, e.g. the upper side, to a power feeding line, and on the other side, e.g. the lower side, to a load to be supplied.

The lower electrical contacts 9a and the upper electrical contacts 9b extend parallel to the direction S and protrude from a rear side 19 of the circuit breaker unit 3 towards the rear portion 22 of the switchgear apparatus 2.

The circuit breaker unit 3, through the trolley 8, is movable from an extraction position E, shown in Figure 1, in which the electric contacts 9 - which are movable along with the circuit breaker unit 3 - are separated from the respective stationary electric contacts (not shown), to an insertion position I, in which the movable electric contacts 9 are coupled with the respective stationary electric contacts.

The trolley 8 is coupled to a worm-screw which is drivable by a handle connectable to a worm-screw end 16. By rotating the worm-screw through the handle, the trolley 8 can be moved from the insertion position I to the extraction position E, with respect to the switchgear casing 4.

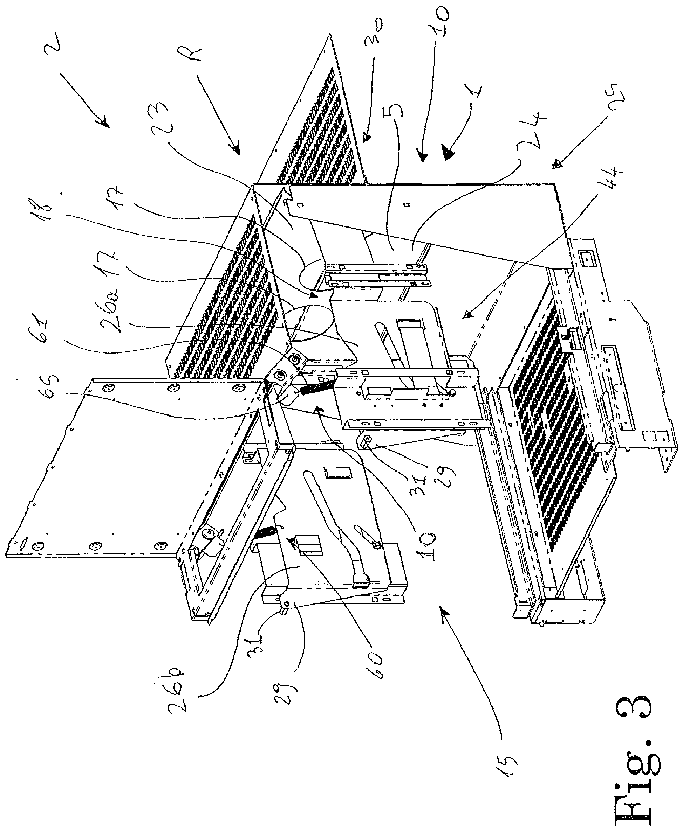

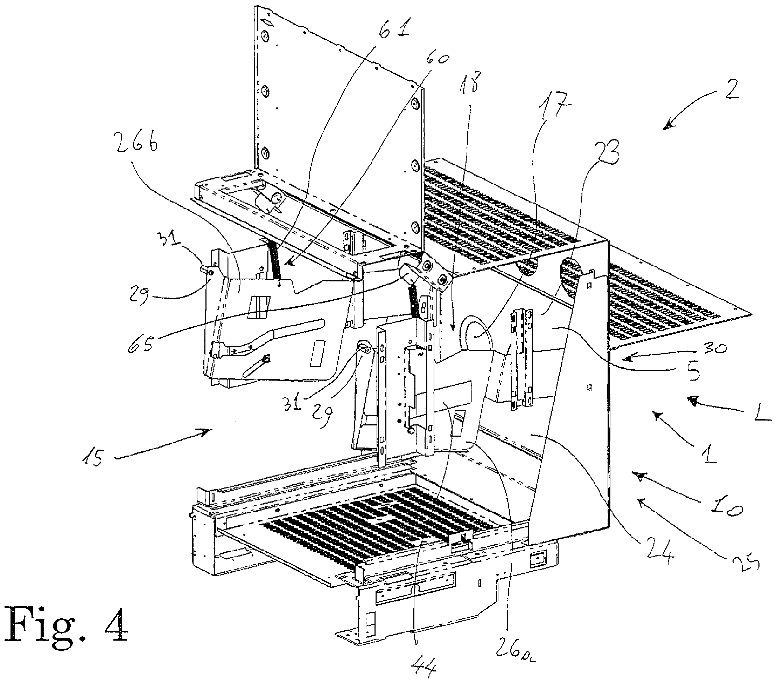

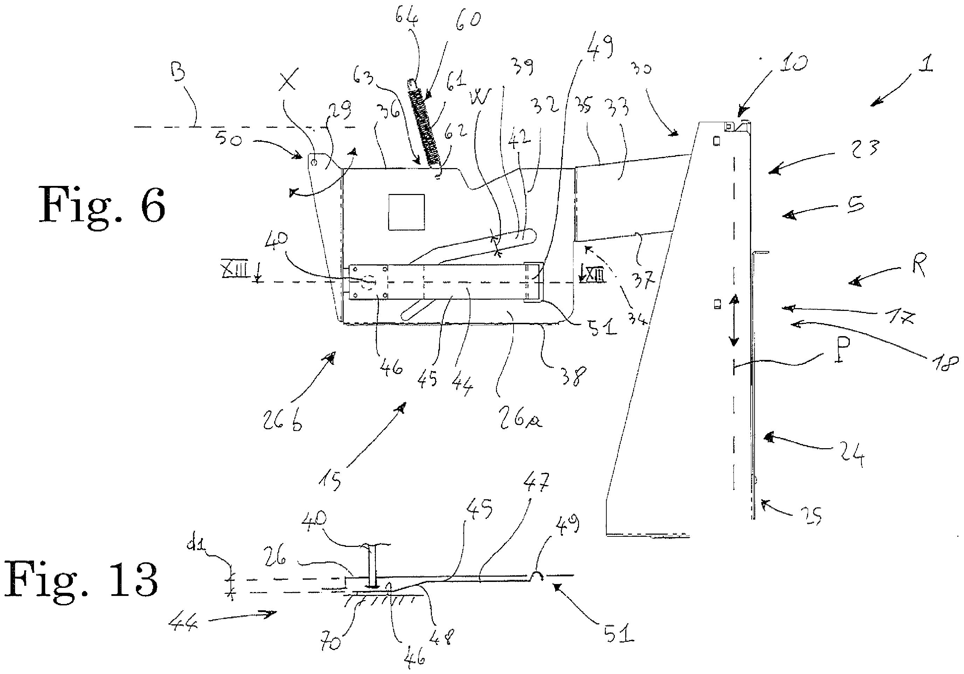

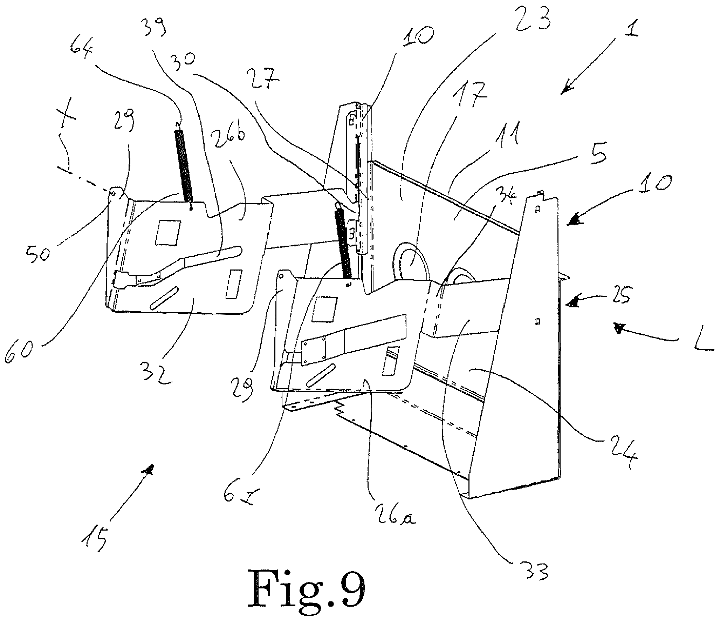

The shutter device 1 comprises a shutter panel or plate 5 which is movable from a raised position R, shown in Figures 1, 3, 5, 6 7, 8 to a lowered position L, shown in Figures 2, 4, 9 to 12, along a straight path P, in particular a vertical straight path, better shown in Figures 6, 8, 10 and 12. The shutter device 1 is driven by a lever mechanism 15 which is driven in its turn by the movement of the circuit breaker unit 3, as will be disclosed in detail hereinafter.

The shutter panel 5 is configured to maintain the same orientation in both the lowered position L and the raised position R. in other words, the shutter panel 5 is arranged parallel to the path P and keeps its orientation constant while moving along the straight path P. The shutter panel 5 is slidable along a pair of guide elements 10 which are fixed to the switchgear casing 4, e.g. to components of the supporting frame 6.

The shutter panel 5, in the raised position R, is arranged in a protective position so as to cover/hinder access to the stationary electric contacts 100 when the movable electric contacts 9 are separated there from. On the contrary, the shutter panel 5, while being in the lowered position L, is arranged in a non-protective position uncovering the stationary electric contacts 100 which are thus accessible for making contact with the movable electric contacts 9.

In the exemplary embodiment illustrated, the shutter panel 5 has, in a non limitative way, a rectangular shape.

The shutter panel 5 comprises a top edge 11 and a bottom edge 12, which are straight and parallel to one other. The shutter panel 5 comprises a first side edge 13, and a second side edge 14, which, in particular, are straight and parallel to one other. The shutter panel 5 can be made of a light and/or fireproof and electric insulator material with a high mechanical strength. The shutter panel 5 can be made of a suitable plastics material.

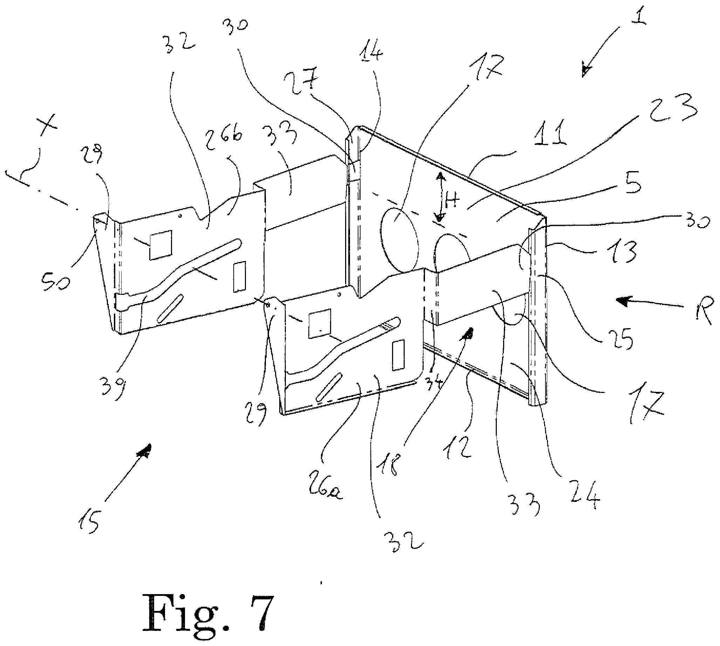

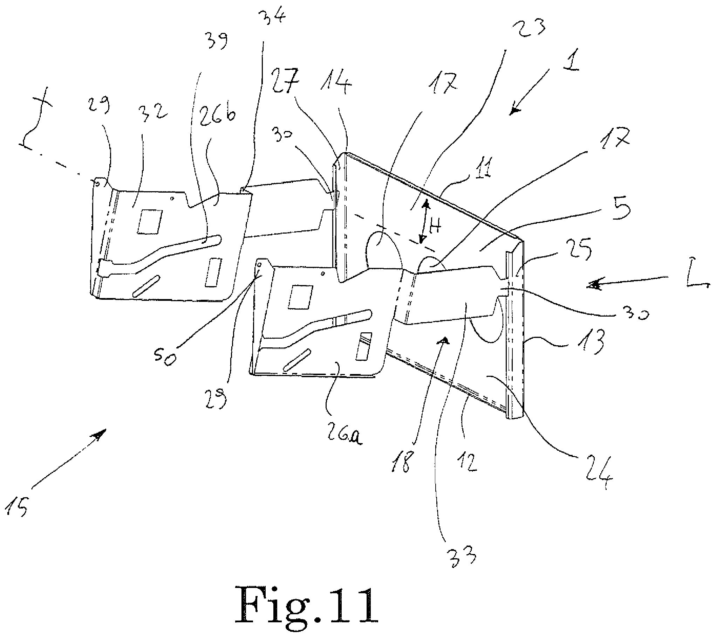

On the shutter panel 5 there are defined three different zones which extend longitudinally and parallel to one other, i.e. an upper covering zone 23, a middle passage zone 18, and a lower covering zone 24. The upper covering zone 23 has a height H, as shown in Figures 7 and 11.

The upper covering zone 23 and the lower covering zone 24, when the shutter panel 5 is in the raised position R, are positioned in front of respectively the upper stationary electric contacts and the lower stationary electric contacts so as to prevent access thereto.

On the middle passage zone 18, at least a passage opening 17 is obtained which enables the lower movable electric contacts 9a to pass through the shutter panel 5 in the insertion position I in order to couple with the lower stationary electric contacts. In particular, when the shutter panel 5 is in the lowered position L the upper stationary electric contacts are uncovered, and access of the upper movable electric contacts 9b is enabled. In such a configuration, the upper movable electric contacts 9b are at a quote higher than the shutter panel 5 and can go beyond the top edge 11 of the latter, thus reaching the upper stationary electric contacts. Therefore, when the shutter panel 5 is in the lowered position L, the above mentioned height H is such as to enable the upper covering zone 23 to be placed between the upper movable electric contacts 9b and the lower movable electric contacts 9a allowing the contacts 9a, 9b to connect with the corresponding stationary contacts 100 at the same time.

On the shutter panel 5 a suitable number of passage openings 17 adequately spaced from each other can be provided according to the number and configuration of the electric contacts, in particular of the lower movable electric contacts 9a. In the embodiment here disclosed, three passage openings 17 are provided, which are longitudinally distributed in the middle passage zone 18 of the shutter panel 5. The three passage openings 17 are uniformly spaced apart from one other and in particular have a circular shape. However, the passage openings 17 may be configured according to any other suitable shape, for example a polygonal shape.

A first rib portion 25 and a second rib portion 27 protrude from the first side edge 13 and from the second side edge 14 of the shutter panel 5, respectively, and are suitable for connecting the shutter panel 5 to the lever mechanism 15.

The lever mechanism 15 comprises a pair of driving levers 26 for driving the shutter panel 5 upon a movement of the circuit breaker unit 3. The two driving levers 26 are arranged parallel to one other and at opposite lateral sides with respect to the circuit breaker unit 3. In particular, a first driving lever 26a and a second driving lever 26b are positioned in proximity of a first side wall 28a and of a second side wall 28b of the circuit breaker unit 3, respectively.

The driving levers 26 comprise each a hinge connecting end 29 through which they are pivotally connected to respective hinge pins 31 which are fixed to the supporting frame 6. In particular, the hinge pins 31 are rotatably coupled with an upper corner 50 of the hinge connecting end 29.

The driving levers 26 comprise each a panel connecting end 30 through which they are connected to the first rib portion 25 and to the second rib portion 27 of the shutter panel 5, respectively. Coupling of the panel connecting ends 30 to the shutter panel 5 is configured so as to allow a relative angular movement of each driving lever 26 and the shutter panel 5 with respect to one other. The coupling so configured enables the shutter panel 5 to follow the vertical straight path P while the driving levers 26 rotate about an rotation axis X defined by the hinge pins 31. The driving levers 26, by rotating, move the shutter panel 5 to the raised position R or to the lowered position L, according to the rotating direction thereof about the hinge pins 31.

Each driving lever 26 has a substantially plane shape, i.e. has a thickness dimension which is significantly smaller than a longitudinal and height dimensions thereof. The driving levers 26 extend so as to result substantially orthogonal to the rotation axis X. Owing to such an orientation, the driving levers 26 are able to effectively withstand a mechanical stress, in particular flexure actions taking place in a plane orthogonal to the rotation axis and which are due to the loads received from the shutter panel 5 and the circuit breaker unit 3. Owing to the above mentioned configuration, the driving levers 26 are at the same time very light and mechanically resistant. Furthermore, owing to the reduced thickness of the driving levers 26, small gaps between the side walls 28 of the circuit breaker unit 3 and the lateral walls of the switchgear casing 4 suffice for housing the driving levers 26 and for allowing a proper operation movement of the latter. Therefore, the shutter device 1 according to the invention, advantageously, implies a reduction of the overall dimensions of the switchgear apparatus 2, in contrast with the prior art devices.

The driving levers 26 can be made from a suitable sheet material, such as a metal.

In particular, each driving lever 26 is made from a metal plate. Each driving lever 26 defines a one-piece or enbloc element connecting the shutter panel 5 to the respective hinge pin 31.

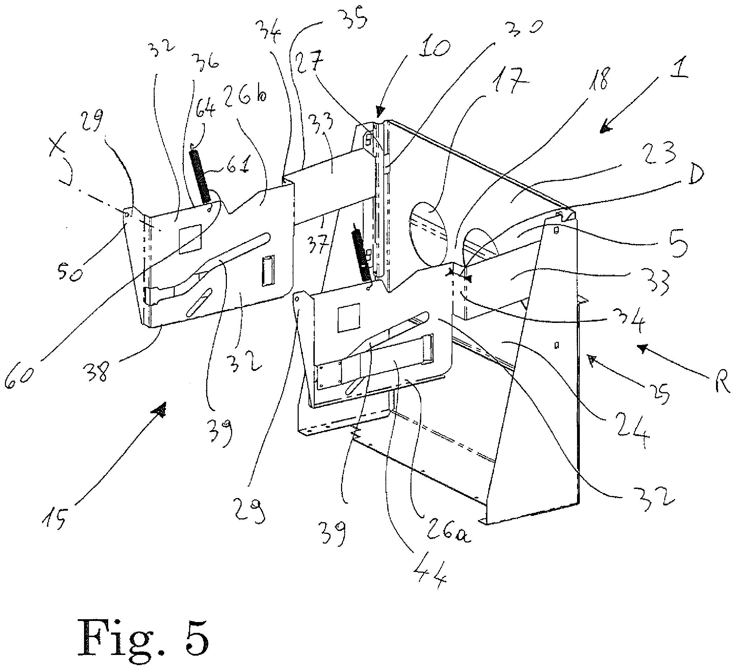

With reference to Figures 5 to 12, each lever 26 comprises a wide portion 32, which is nearer to the respective hinge connecting end 29, and a narrow portion 33 which is nearer to the respective panel connecting end 30.

The wide portions 32 and the narrow portions 33 have a substantially plane and rectangular shape. A right angle portion 34 connects the wide portions 32 to the narrow portions 33.

The wide portion 32 and the narrow portion 33 of each driving lever 26 lie in respective planes which are mutually parallel and spaced by a suitable offset-distance D (Figure 5) which can be chosen according to the longitudinal dimension of the shutter panel and the width of the circuit breaker unit 3.

A first upper edge 35 of the narrow portion 33 and a second upper edge 36 of the wide portion 32 (visible in Figures 5, 6, 8, 10, 12), are substantially at a similar quote, and they are substantially as an extension of one other. A first lower edge 37 of the narrow portion 33 is positioned at a higher quote than a second lower edge 38 of the wide portion 32.

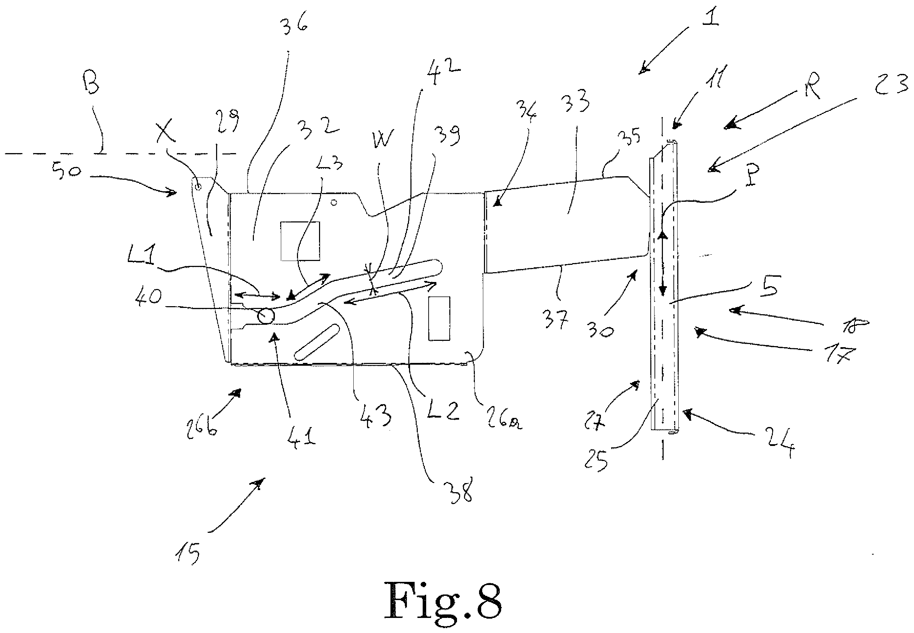

When the shutter panel 5 is in the raised position R, the first upper edge 35 is substantially horizontal, as can be seen for example from figures 6 and 8.

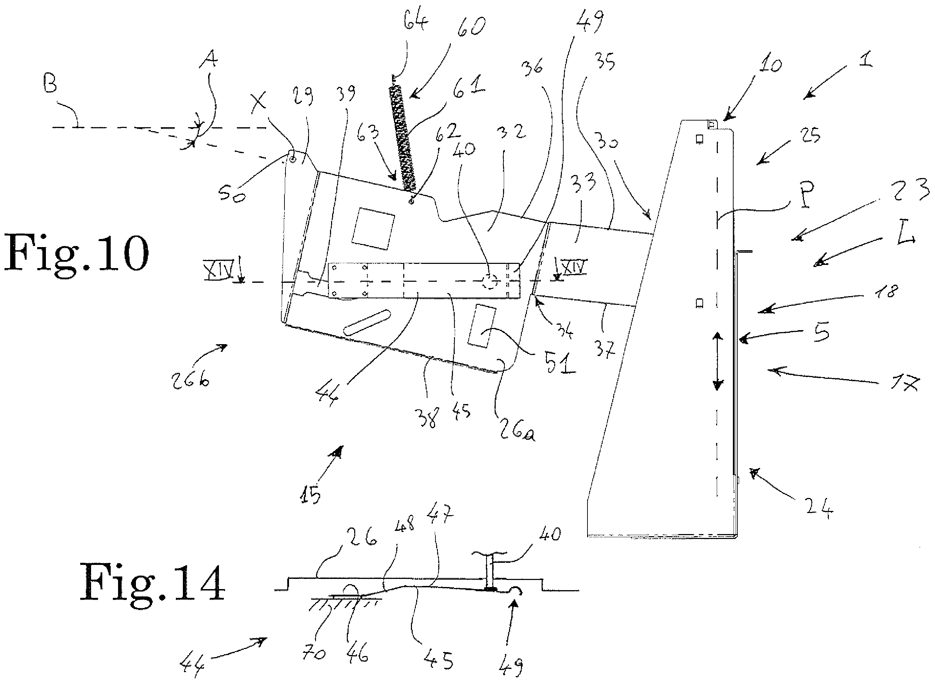

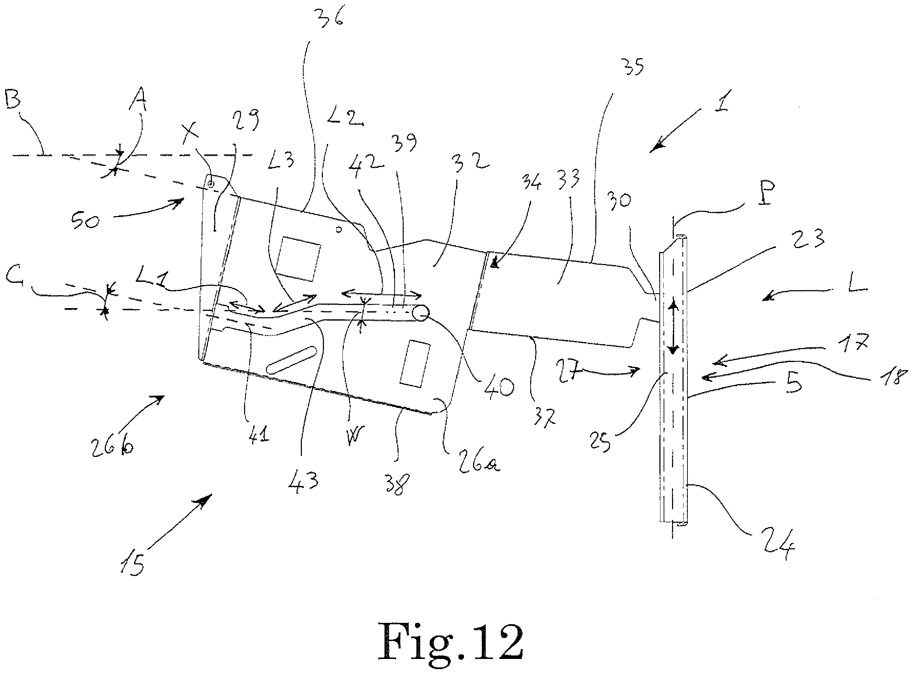

When the shutter panel 5 is in the lowered position L, the first upper edge 35 is tilted by a first angle A with respect to a reference horizontal line B, as can be seen from figures 10 and 12.

On each wide portion 32 there is obtained a cam profiled slot 39 which is configured for cooperating with a respective driving pin element 40 (shown in Figures 6, 8 and 12) fixed to the circuit breaker unit 3, in order to move the driving levers 26.

The two driving pin elements 40 protrude orthogonally respectively from the first side wall 28a and the second side wall 28b of the circuit breaker unit 3. Each driving pin element 40 has a diameter which is equal to or less than the transverse wideness W of the cam profiled slot 39, in order to be able to run along the latter. The driving pin elements 40 may comprise respective head ends which are larger than the transverse wideness W and which limit a possible movement of the driving lever 26 transversely and away from the side wall 28 of the circuit breaker unit 3. In this way, accidental disengaging of the driving levers 26 from the driving pin elements 40 is prevented.

With reference to figures 8 and 12, the cam profiled slot 39 comprises a portion which is nearest to the hinge connecting end 29, i.e. a first slot portion 41 having a first length L1. The first slot portion 41 is arranged substantially horizontal when the shutter panel 5 is in the raised position R, as can be seen in Figure 8. On the contrary, the first slot portion 41 is sloping from the hinge connecting portion 29 downwards when the shutter panel 5 is in the lowered position L, as can be seen in Figure 12. In other words, in such a position, the first slot portion 41 results tilted with respect to the reference horizontal line B substantially by the first angle A.

The cam profiled slot 39 comprises a second slot portion 42 which is nearer to the panel connecting end 30 than the first slot portion 41. The second slot portion 42 extends in a zone of the wide portion 32 which is nearer to the second upper edge 36 than the first slot portion 41.

The second slot portion 42 has a second length L2, which is in particular greater than the first length L1. The second slot portion 42 is angularly inclined with relative to the first slot portion 41 by a second angle C, shown in Figure 12. When the shutter panel 5 is in the raised position R, the second slot portion 42 is tilted upwards along a direction pointing to the shutter panel 5. On the contrary, when the shutter panel 5 is in the lowered position L, the second slot portion 42 is substantially horizontally arranged.

The cam profiled slot 39 comprises a third slot portion 43 connecting the first slot portion 41 and the second slot portion 42, and having a third length L3. The third slot portion 43 is tilted with respect to the first slot portion 41 and the second slot portion 42.

The driving pin elements 40, moving integrally with the circuit breaker unit 3, run into the respective cam profiled slots 39 and force the driving levers 26 to follow them, thus causing a rotation of the driving levers 26 around the hinge pins 31.

Owing to the cam profiled slot 39, a better interaction of the driving pin elements 40 with the driving levers 26 is achieved. In particular, the angular position of the driving levers 26 is firmly determined by the position of the driving pin elements 40 and when the latter are motionless, no rotation of the driving levers in clockwise or counter-clockwise is allowed, differently from the prior art shutter devices. In other words, in the shutter device 1 according to the invention, a bilateral constraint is defined between the cam profiled slot 39 and the driving pin elements 40 which prevents any undesired or inopportune rotation of the driving levers.

The cam profiled slot 39 is shaped for abutting the pin elements 40 from opposite sides thus preventing disengagement of the driving levers 26a, 26b from the pin elements 40 during functioning of the shutter device 1.

Such a bilateral constraint force the shutter panel 5 to follow the driving pin elements 40 both when the driving pin elements 40 move to the insertion position I and when the driving pin elements 40 move to the extraction position E. This configuration prevents any accidental jamming of the driving levers 26 and any tampering of the shutter panel 5 by imprudent personnel.

Furthermore, the shutter device 1 is advantageously easier and cheaper to construct compared with prior art devices. For example, it is easier to bore and cut out a portion from the driving levers made of metal sheet material in order to obtain a cam slot having any desired profile, with respect to the prior art where expensive operations are required for shaping an unilateral cam surface on rather thick driving levers.

The shutter device 1 comprises a return elastic arrangement 60 which assists movement of the shutter panel 5; in particular it helps the driving levers 26 to lift the shutter panel 5 to the raised position R.

In the non-limitative exemplary embodiment here described, the return elastic arrangement 60 comprises at least a return spring 61, in particular a pair of return springs 61 each coupled with a respective driving lever 26. The return springs 61 are in particular of helical type.

Each return spring 61 has a first end 62 connected to a connecting zone 63 of the driving lever 26. In particular, the connecting zone 63 is positioned in the wide portion 32 of the driving lever 26 and near the second upper edge 36, at a suitable distance from the upper corner 50.

Each return spring 61 has a second end 64 which is suitable to be connected to a stationary connection part 65 of the supporting frame 6, the stationary connection part 65 being positioned at a higher quote with respect to the upper corner 50 of the driving levers 26.

The shutter device 1 is provided with a locking arrangement 44, better shown in Figures 6, 10, 13, 14, which is configured for safely locking the shutter panel 5 in the raised position R, so as to prevent accidental lowering thereof or tampering thereof by imprudent personnel.

The locking arrangement 44 comprises a leaf spring element 45 for each driving lever 26. Of course, a single leaf spring element 45 associated to only one of the driving levers 26 can be provided in an alternative embodiment.

As the two leaf spring elements are functionally and structurally analogous to each other, only description of the leaf spring element 45 cooperating with the driving lever 26a will now follow.

The leaf spring element 45 extends substantially parallel to the driving lever 26 and is substantially horizontally arranged.

The leaf spring element 45 has an end intended to be fixed to a suitable part of the switchgear casing 4, and a further end, which is free to move upon a flexure force, as it will result from the following detailed description.

The leaf spring element 45 comprises a fixing portion 46 through which it can be fixed to a stationary part 70 of the switchgear casing 4. The fixing portion 46 is spaced apart form the driving lever 26 by a first distance d1, shown in Figure 13, such as not to interact with the driving pin element 40.

The leaf spring element 45 comprises an oblong portion 47 which is configured for cooperating with the respective driving pin element 40. The oblong portion 47 extends in a direction towards the shutter panel 5 and is free to flex. At the end of the leaf spring element 45 which is opposite to the fixing portion 46, there is provided a locking portion 49 integral with the oblong portion 47. The locking portion 49 is shaped so as to protrude by a suitable amount in a direction pointing inside the switchgear apparatus 2. The locking portion 49 is configured for cooperating with a respective locking seat 51 which is obtained in the driving lever 26. In particular, the locking portion 49 is shaped for being received in the locking seat 51 when the shutter panel 5 is in the raised position R, i.e. when the shutter device 1 is in the protection position. With the locking portion 49 housed in the locking seat 51, a rotation of the driving lever 26 around a rotation axis X is blocked. In this way any tampering action for lowering the shutter panel 5 is prevented.

The oblong portion 47 is joined to the fixing portion 46 by a ramp portion 48, so as to be offset with respect to the fixing portion 46. In other words, the fixing portion 46 and the oblong portion 47, in a rest configuration of the leaf spring element 45, define respective planes which are mutually parallel and spaced apart. The oblong portion 47, in the rest configuration, is nearer to the driving lever 26 than the fixing portion 46, in such a way that the locking portion 49 is housed in the locking seat 51.

During functioning, while the circuit breaker unit 3 moves from the extraction position E to the insertion position I, the driving pin element 40 initially goes into contact with the ramp portion 48 and then with the oblong portion 47. The driving pin element 40 slides on the ramp portion 48 by exerting on it a pressure action which progressively increases and makes the leaf spring element 45 flex away from the driving levers 26 so that the locking portion 49 disengages from the locking seat 51. In this way, the driving lever 26 is released from a locking configuration and rotation thereof is allowed. As visible in Figure 14, once the locking portion 49 is out of the locking seat 51, the driving pin element 40 keeps to hold the leaf spring element 45 bent and separated from the driving lever 26. The driving pin element 40, by running in the cam profiled slot 39, lowers the driving lever 26 downwards until the shutter panel 5 reaches the lowered position L, as in Figure 10.

The shutter device 1 according to the invention above discussed, fully achieves the intended aims of providing a shutter device which is very reliable, safe, structurally simplified, cheap to manufacture and able to reduce the overall dimensions of a switchgear apparatus with which it can be associated.

The shutter device 1 (and related switchgear apparatus as well) thus conceived may undergo numerous modifications and come in several variants, all falling within the scope of the inventive concept as defined by the appended claims; also the component materials and dimensions may be of any type, according to needs and the state of the art and provided they are compatible with the scope of the invention as defined in the appended claims.

## Claims

1. Shutter device (1) for a switchgear apparatus (2) comprising stationary electric contacts (100) and a circuit breaker (3) having movable electric contacts (9a, 9b), the shutter device comprising:
- a panel element (5) movable between a non-protective position in which said panel element (5) enables said movable electric contacts (9a, 9b) to couple with corresponding stationary electric contacts (100), and a protective position in which said panel element (5) hinders coupling to said stationary electric contacts (100);
- driving lever means (26, 26a, 26b) configured for driving said panel element (5) upon a movement of said movable electric contacts (9a, 9b), wherein said driving lever means comprise a first driving lever (26a) and a second driving lever (26b) mutually parallel and each of which is pivotally connectable to a respective stationary hinge pin (31), so as to rotate about a rotation axis (X) which is arranged parallel to said panel element (5);
- cam portions (39) provided on both said first driving lever (26a) and second driving lever (26b), each cam portion (39) being suitable for interacting with a respective driving pin (40) which is fixed on said circuit breaker (3) and is movable together with said movable electric contacts (9a, 9b), wherein each of said cam portions (39) comprises a cam profiled slot means (39) in which said respective driving pin (40) is receivable, **characterised in that** said first driving lever (26a) and said second driving lever (26b) comprise each a connecting end (30) which is connected at a first side edge (13) and at a second side edge (14) of said panel element (5), respectively, and wherein each of said cam profiled slot means (39) is shaped for abutting on the respective driving pin (40) from opposite sides thus preventing disengagement of said driving levers (26a, 26b) from the respective driving pins (40) during functioning of said shutter device (1).

2. Shutter device according to claim 1, wherein said panel element (5) is movable along a straight path (P).

3. Shutter device according to any one of claim 1-2, wherein said first driving lever (26a) and said second driving lever (26b) define each a one-piece element.

4. Shutter device according to any one of claims 1 to 3, wherein said cam profiled slot means comprise cam slots (39) which are cut-out from wide portions (32) of said driving lever means (26a, 26b).

5. Shutter device according to claim 4, wherein each cam slot (39) comprises a first slot portion (41) extending substantially near and parallel to a lower edge (38) of said wide portion (32), a second slot portion (42) extending in a zone of said wide portion (32) which is nearer to an upper edge (36) of said wide portion (32) than said first slot portion (41), said second slot portion (42) being angularly tilted with respect to said first slot portion (41), and a third slot portion (43) connecting said first slot portion (41) and said second slot portion (42), said third slot portion (43) being tilted with respect to both said first slot portion (41) and said second slot portion (42).

6. Shutter device according to claim 5, wherein said second slot portion (42) extends from a first end near said third slot portion (43) and closer to said lower edge (38) to a second end which is farther from said lower edge (38) with respect to said first end.

7. Shutter device according to any one of claims 4 to 6, wherein said driving lever means (26a, 26b) comprise narrow portions (33) integral with said wide portions (32) and connecting said wide portions (32) to said panel element (5), said narrow portions (33) being arranged parallel and offset with respect to said wide portions (32).

8. Shutter device according to any one of claims 1 to 7, wherein said panel element (5) comprises a middle passage zone (18) on which there are provided passage openings (17) through which lower movable electric contacts (9a) can extend for coupling with respective stationary electric contacts when said panel element (5) is in said non-protective position, and wherein said panel element (5) comprises an upper covering zone (23) and a lower covering zone (24) configured for preventing access respectively to upper stationary electric contacts and lower stationary electric contacts when said panel element (5) is in said protective position.

9. Shutter device according to claim 8, wherein said upper covering zone (23) has a height (H) such as to be placed between upper movable electric contacts (9b) and said lower movable electric contacts (9b) when said panel element (5) is in said non-protective position.

10. Shutter device according to any one of claims 1 to 9, further comprising a return elastic arrangement (60) for assisting movement of said panel element (5), wherein said return elastic arrangement (60) comprises return springs (61) an end (62) of which is connected to said driving lever means (26a, 26b) and a further end (64) of which is connectable to a stationary connection part (70) of said switchgear apparatus (2).

11. Shutter device according to any one of claims 1 to 10, further comprising a locking arrangement (44) for safely locking said panel element (5) in said protective position, said locking arrangement (44) comprising leaf spring means (45) cooperating with said driving lever means (26a, 26b).

12. Shutter device according to claim 11, wherein said leaf spring means (45) comprise a fixing portion (46) fixable to a stationary part (70) of said switchgear apparatus (2), and an oblong portion (47) intended to be closer to said driving lever means (26a, 26b) with respect to said fixing portion (46), a ramp portion (48) connecting said oblong portion (47) to said fixing portion (46).

13. Shutter device according to claim 12, wherein said leaf spring means (45) comprise at a free end of said oblong portion (47) a locking portion (49) configured for being housed in a respective locking seat (51) obtained in said driving lever means (26a, 26b), when said panel element (5) is in said protective position, and wherein said ramp portion (48) and said oblong portion (47) are configured for receiving from said pin means (4) a flexure action making said leaf spring means (45) flex in order to disengage said locking portion (49) from said locking seat (51) when said panel element (5) is to be moved from said protective position to said non protective position.

14. Switchgear apparatus (2) **characterised in that** it comprises a shutter device (1) according to any one of claims 1 to 13, a slidable circuit breaker unit (3) on which said pin means (40) and said movable electric contacts (9a, 9b) are fixed, wherein said slidable circuit breaker unit (3) is movable, along a direction (S) substantially orthogonal to said panel element (5), from an extraction position (E), in which said movable electric contacts (9a, 9b) are separated from said stationary electric contacts and said panel element (5) is in said protective position, to an insertion position (I), in which said movable electric contacts (9a, 9b) are coupled with said stationary electric contacts and said panel element (5) is in said non-protective position.

## Patentansprüche

1. Blendenvorrichtung (1) für eine Schaltgerätevorrichtung (2), aufweisend stationäre elektrische Kontakte (100) und einen Leistungsschalter (3) mit beweglichen elektrischen Kontakten (9a, 9b), wobei die Blendenvorrichtung aufweist:
- ein Panelelement (5), das zwischen einer Nichtschutzposition, in der das Panelelement (5) die beweglichen elektrischen Kontakte (9a, 9b) in die Lage versetzt, sich mit entsprechenden stationären elektrischen Kontakten (100) zu verbinden, und einer Schutzposition, in der das Panelelement (5) die Verbindung zu den stationären elektrischen Kontakten (100) unterbindet, beweglich ist;
- Antriebshebeleinrichtungen (26, 26a, 26b), die so konfiguriert sind, dass sie das Panelelement (5) bei einer Bewegung der beweglichen elektrischen Kontakte (9a, 9b) antreiben, wobei die Antriebshebeleinrichtungen einen ersten Antriebshebel (26a) und einen zweiten Antriebshebel (26b) aufweisen, die jeweils parallel zueinander sind und wobei jede von ihnen schwenkbar mit einem entsprechenden stationären Angelstift (31) verbunden ist, so dass sie um eine Rotationsachse (X) rotieren, die parallel zu dem Panelelement (5) angeordnet ist;
- Nockenabschnitte (39), die sich sowohl auf dem ersten Antriebshebel (26a) und dem zweiten Antriebshebel (26b) befinden, wobei jeder Nockenabschnitt (39) geeignet ist, mit einem entsprechenden Antriebsstift (40) zusammenzuwirken, der an dem Leistungsschalter (3) befestigt ist und zusammen mit den beweglichen elektrischen Kontakten (9a, 9b) beweglich ist, wobei jeder der Nockenabschnitte (39) eine Nockenprofil-Spalteinrichtung (39) aufweist, in der der entsprechende Antriebsstift (40) aufgenommen werden kann, **dadurch gekennzeichnet, dass** der erste Antriebshebel (26a) und der zweite Antriebshebel (26b) jeweils ein Verbindungsende (30) aufweisen, das an einer ersten Seitenkante (13) oder an einer zweiten Seitenkante (14) des Panelelements (5) verbunden ist, und wobei jede von den Nockenprofil-Spalteinrichtungen (39) so geformt ist, dass sie an den entsprechenden Antriebsstift (40) von gegenüberliegenden Seiten anstößt, wodurch eine Loslösung der Antriebshebel (26a, 26b) von den entsprechenden Antriebsstiften (40) während des Betriebs der Blendenvorrichtung (1) verhindert wird.

2. Blendenvorrichtung nach Anspruch 1, wobei das Panelelement (5) entlang eines geraden Pfads (P) beweglich angeordnet ist.

3. Blendenvorrichtung nach einem der Ansprüche 1 bis 2, wobei der erste Antriebshebel (26a) und der zweite Antriebshebel (26b) jeweils ein einstückiges Element definieren.

4. Blendenvorrichtung nach einem der Ansprüche 1 bis 3, wobei die Nockenprofil-Spalteinrichtung Nockenspalte (39) aufweist, die aus breiten Abschnitten (32) der Antriebshebeleinrichtungen (26a, 26b) ausgeschnitten sind.

5. Blendenvorrichtung nach Anspruch 4, wobei jeder Nockenspalt (39) einen ersten Spaltabschnitt (41), der im Wesentlichen in der Nähe und parallel zu einer Unterkante (38) des breiten Abschnitts (32) verläuft, einen zweiten Spaltabschnitt (42), der in einer Zone des breiten Abschnitts (32) verläuft, die näher an einer Oberkante (36) des breiten Abschnitts (32) liegt als der erste Spaltabschnitt (41), wobei der zweite Spaltabschnitt (42) im Verhältnis zu dem ersten Spaltabschnitt (41) winkelig geneigt ist, und einen dritten Spaltabschnitt (43), der den ersten Spaltabschnitt (41) und den zweiten Spaltabschnitt (42) verbindet, aufweist, wobei der dritte Spaltabschnitt (43) im Verhältnis zu sowohl dem ersten Spaltabschnitt (41) und dem zweiten Spaltabschnitt (429 geneigt ist.

6. Blendenvorrichtung nach Anspruch 5, wobei der zweite Spaltabschnitt (42) von einem ersten Ende in der Nähe des dritten Spaltabschnitts (43) und näher an der Unterkante (38) zu einem zweiten Ende verläuft, das von der Unterkante (38) im Verhältnis zu dem ersten Ende weiter entfernt ist.

7. Blendenvorrichtung nach einem der Ansprüche 4 bis 6, wobei die Antriebshebeleinrichtungen (26a, 26b) enge Abschnitte (33) aufweisen, die mit den breiten Abschnitten (32) einstückig sind und die breiten Abschnitte (32) mit dem Panelelement (5) verbinden, wobei die engen Abschnitte (33) parallel angeordnet sind und im Verhältnis zu den breiten Abschnitten (32) versetzt sind.

8. Blendenvorrichtung nach einem der Ansprüche 1 bis 7, wobei das Panelelement (5) eine Mittenpassagenzone (18) aufweist, in der Passagenöffnungen (17) vorhanden sind, durch die untere bewegliche elektrische Kontakte (9a) für das Verbinden mit entsprechenden stationären elektrischen Kontakten (9a) verlaufen können, wenn sich das Panelelement (5) in der Nichtschutzposition befindet, und wobei das Panelelement (5) eine obere Abdeckzone (23) und eine untere Abdeckzone (24) aufweist, die so konfiguriert sind, dass sie einen Zugang zu den oberen stationären elektrischen Kontakten und den unteren stationären elektrischen Kontakten verhindern, wenn sich das Panelelement (5) in der Schutzposition befindet.

9. Blendenvorrichtung nach Anspruch 8, wobei die obere Abdeckzone (23) eine Höhe (H) aufweist, mit der sie zwischen den oberen beweglichen elektrischen Kontakten (9b) und den unteren beweglichen elektrischen Kontakten (9b) platziert sein kann, wenn sich das Panelelement (5) in der Nichtschutzposition befindet.

10. Blendenvorrichtung nach einem der Ansprüche 1 bis 9, ferner aufweisend eine elastische Rückkehranordnung (60), um die Bewegung des Panelelements (5) zu unterstützen, wobei die elastische Rückkehranordnung (60) Rückholfedern (61) aufweist, deren Ende (62) mit den Antriebshebeleinrichtungen (26a, 26b) verbunden ist, und wobei ein weiteres Ende (64) derselben mit einem stationären Verbindungsteil (70) der Schaltgerätevorrichtung (2) verbunden werden kann.

11. Blendenvorrichtung nach einem der Ansprüche 1 bis 10, ferner aufweisend eine Sperranordnung (44) zum sicheren Sperren des Panelelements (5) in der Schutzposition, wobei die Sperranordnung (44) Blattfedereinrichtungen (45) aufweist, die mit den Antriebshebeleinrichtungen (26a, 26b) zusammenwirken.

12. Blendenvorrichtung nach Anspruch 11, wobei die Blattfedereinrichtungen (45) einen Befestigungsabschnitt (46), der an einem stationären Teil (70) der Schaltgerätevorrichtung (2) befestigt werden kann, und einen rechteckigen Abschnitt (47), der darauf ausgelegt ist, dass er im Verhältnis zu dem Befestigungsabschnitt (46) näher an den Antriebshebeleinrichtungen (26a, 26b) liegt, aufweist, wobei ein Rampenabschnitt (48) den rechteckigen Abschnitt (47) mit dem Befestigungsabschnitt (46) verbindet.

13. Blendenvorrichtung nach Anspruch 12, wobei die Blattfedereinrichtungen (45) an einem freien Ende des rechteckigen Abschnitts (47) einen Sperrabschnitt (49) aufweisen, der so konfiguriert ist, dass er sich in einem entsprechenden Sperrsitz (51) befindet, der in den Antriebshebeleinrichtungen (26a, 26b) erhalten wird, wenn sich das Panelelement (5) in der Schutzposition befindet, und wobei der Rampenabschnitt (48) und der rechteckige Abschnitt (47) so konfiguriert sind, dass sie von der Stifteinrichtung (4) einem Biegevorgang unterzogen werden, wodurch die Blattfedereinrichtungen (45) sich biegen, um den Sperrabschnitt (49) von dem Sperrsitz (51) zu lösen, wenn das Panelelement (5) aus der Schutzposition in die Nichtschutzposition bewegt werden soll.

14. Schaltgerätevorrichtung (2), **dadurch gekennzeichnet, dass** sie eine Blendenvorrichtung (1) nach einem der Ansprüche 1 bis 13, eine gleitbare Leistungsschaltereinheit (3), auf der die Stifteinrichtung (40) und die beweglichen elektrischen Kontakte (9a, 9b) befestigt sind, aufweist, wobei die gleitbare Leistungsschaltereinheit (3) entlang einer Richtung (S), die im Wesentlichen rechtwinklig zu dem Panelelement (5) ist, von einer Auszugsposition (E), in der die beweglichen elektrischen Kontakte (9a, 9b) von den stationären elektrischen Kontakten getrennt sind und sich das Panelelement (5) in der Schutzposition befindet, zu einer Einführposition (I), in der die beweglichen elektrischen Kontakte (9a, 9b) mit den stationären elektrischen Kontakten verbunden sind und sich das Panelelement (5) in der Nichtschutzposition befindet, bewegt werden kann.

## Revendications

1. Dispositif obturateur (1) pour un appareil de commutation (2), comprenant des contacts électriques fixes (100) et un disjoncteur (3) ayant des contacts électriques mobiles (9a, 9b), le dispositif obturateur comprenant :
- un élément de panneau (5) pouvant se déplacer entre une position de non-protection, dans laquelle ledit élément de panneau (5) permet auxdits contacts électriques mobiles (9a, 9b) de se coupler avec des contacts électriques fixes correspondants (100), et une position de protection, dans laquelle ledit élément de panneau (5) empêche le couplage avec lesdits contacts électriques fixes (100) ;
- des moyens de leviers d'entraînement (26, 26a, 26b) configurés pour entraîner ledit élément de panneau (5) suite à un déplacement desdits contacts électriques mobiles (9a, 9b), où lesdits moyens de leviers d'entraînement comprennent un premier levier d'entraînement (26a) et un deuxième levier d'entraînement (26b) mutuellement parallèles et dont chacun peut être relié en pivotement à une broche d'articulation fixe respective (31), de manière à tourner autour d'un axe de rotation (X) qui est agencé parallèlement audit élément de panneau (5) ;
- des parties de came (39) prévues à la fois sur ledit premier levier d'entraînement (26a) et ledit deuxième levier d'entraînement (26b), chaque partie de came (39) étant apte à coopérer avec une broche d'entraînement respective (40) qui est fixée sur ledit disjoncteur (3) et peut se déplacer conjointement avec lesdits contacts électriques mobiles (9a, 9b), où chacune desdites parties de came (39) comprend des moyens de fentes profilées en cames (39) dans lesquels ladite broche d'entraînement respective (40) peut être reçue, **caractérisé en ce que** ledit premier levier d'entraînement (26a) et ledit deuxième levier d'entraînement (26b) comprennent chacun une extrémité de liaison (30) qui est reliée à un premier bord latéral (13) et à un deuxième bord latéral (14) dudit élément de panneau (5), respectivement, et où chacun desdits moyens de fentes profilées en cames (39) est conformé pour venir en butée contre la broche d'entraînement respective (40) à partir de côtés opposés, empêchant ainsi le désengagement desdits leviers d'entraînement (26a, 26b) des broches d'entraînement respectives (40) pendant le fonctionnement dudit dispositif obturateur (1).

2. Dispositif obturateur selon la revendication 1, dans lequel ledit élément de panneau (5) peut se déplacer le long d'une trajectoire rectiligne (P).

3. Dispositif obturateur selon l'une quelconque des revendications 1 et 2, dans lequel ledit premier levier d'entraînement (26a) et ledit deuxième levier d'entraînement (26b) définissent chacun un élément monobloc.

4. Dispositif obturateur selon l'une quelconque des revendications 1 à 3, dans lequel lesdits moyens de fentes profilées en cames comprennent des fentes de came (39) qui sont coupées à partir des parties larges (32) desdits moyens de leviers d'entraînement (26a, 26b).

5. Dispositif obturateur selon la revendication 4, dans lequel chaque fente de came (39) comprend une première partie de fente (41) s'étendant essentiellement à proximité et parallèlement à un bord inférieur (38) de ladite partie large (32), une deuxième partie de fente (42) s'étendant dans une zone de ladite partie large (32) qui est plus proche d'un bord supérieur (36) de ladite partie large (32) que ladite première partie de fente (41), ladite deuxième partie de fente (42) étant inclinée angulairement par rapport à ladite première partie de fente (41), et une troisième partie de fente (43) reliant ladite première partie de fente (41) et ladite deuxième partie de fente (42), ladite troisième partie de fente (43) étant inclinée à la fois par rapport à ladite première partie de fente (41) et à ladite deuxième partie de fente (42).

6. Dispositif obturateur selon la revendication 5, dans lequel ladite deuxième partie de fente (42) s'étend depuis une première extrémité à proximité de ladite troisième partie de fente (43) et plus près dudit bord inférieur (38) vers une deuxième extrémité qui est éloignée dudit bord inférieur (38) par rapport à ladite première extrémité.

7. Dispositif obturateur selon l'une quelconque des revendications 4 à 6, dans lequel lesdits moyens de leviers d'entraînement (26a, 26b) comprennent des parties étroites (33) solidaires desdites parties larges (32) et reliant lesdites parties larges (32) audit élément de panneau (5), lesdites parties étroites (33) étant agencées parallèlement et décalées par rapport auxdites parties larges (32).

8. Dispositif obturateur selon l'une quelconque des revendications 1 à 7, dans lequel ledit élément de panneau (5) comprend une zone de passage centrale (18) sur laquelle des ouvertures de passage (17) sont prévues à travers lesquelles des contacts électriques mobiles inférieurs (9a) peuvent s'étendre pour le couplage avec des contacts électriques fixes respectifs lorsque ledit élément de panneau (5) se trouve dans ladite position de non-protection, et où ledit élément de panneau (5) comprend une zone de recouvrement supérieure (23) et une zone de recouvrement inférieure (24) configurées pour empêcher l'accès respectivement à des contacts électriques fixes supérieurs et à des contacts électriques fixes inférieurs lorsque ledit élément de panneau (5) se trouve dans ladite position de protection.

9. Dispositif obturateur selon la revendication 8, dans lequel ladite zone de recouvrement supérieure (23) présente une hauteur (H) de façon à être placée entre des contacts électriques mobiles supérieurs (9b) et lesdits contacts électriques mobiles inférieurs (9b) lorsque ledit élément de panneau (5) se trouve dans ladite position de non-protection.

10. Dispositif obturateur selon l'une quelconque des revendications 1 à 9, comprenant en outre un agencement élastique de rappel (60) pour faciliter le déplacement dudit élément de panneau (5), dans lequel ledit agencement élastique de rappel (60) comprend des ressorts de rappel (61) dont une extrémité (62) est reliée auxdits moyens de leviers d'entraînement (26a, 26b) et une extrémité supplémentaire (64) peut être reliée à une partie de liaison fixe (70) dudit appareil de commutation (2).

11. Dispositif obturateur selon l'une quelconque des revendications 1 à 10, comprenant en outre un agencement de verrouillage (44) pour verrouiller de manière sécurisée ledit élément de panneau (5) dans ladite position de protection, ledit agencement de verrouillage (44) comprenant des moyens formant ressort à lame (45) coopérant avec lesdits moyens de leviers d'entraînement (26a, 26b).

12. Dispositif obturateur selon la revendication 11, dans lequel lesdits moyens formant ressort à lame (45) comprennent une partie de fixation (46) pouvant être fixée à une partie fixe (70) dudit appareil de commutation (2), et une partie allongée (47) destinée à être plus proche desdits moyens de leviers d'entraînement (26a, 26b) par rapport à ladite partie de fixation (46), une partie de rampe (48) reliant ladite partie allongée (47) à ladite partie de fixation (46).

13. Dispositif obturateur selon la revendication 12, dans lequel lesdits moyens formant ressort à lame (45) comprennent au niveau d'une extrémité libre de ladite partie allongée (47), une partie de verrouillage (49) configurée pour être logée dans un siège de verrouillage respectif (51) obtenu dans lesdits moyens de leviers d'entraînement (26a, 26b), lorsque ledit élément de panneau (5) se trouve dans ladite position de protection, et dans lequel ladite partie de rampe (48) et ladite partie allongée (47) sont configurées pour recevoir depuis ledit moyen de broche (40), une action de flexion amenant lesdits moyens formant ressort à lame (45) à fléchir afin de désengager ladite partie de verrouillage (49) dudit siège de verrouillage (51) lorsque ledit élément de panneau (5) doit être déplacé depuis ladite position de protection vers ladite position de non-protection.

14. Appareil de commutation (2), **caractérisé en ce qu'**il comprend un dispositif obturateur (1) selon l'une quelconque des revendications 1 à 13, une unité de disjoncteur coulissant (3) sur laquelle ledit moyen de broche (40) et lesdits contacts électriques mobiles (9a, 9b) sont fixés, dans lequel ladite unité de disjoncteur coulissant (3) est mobile, selon une direction (S) essentiellement perpendiculaire audit élément de panneau (5), depuis une position d'extraction (E), dans laquelle lesdits contacts électriques mobiles (9a, 9b) sont séparés desdits contacts électriques fixes et ledit élément de panneau (5) se trouve dans ladite position de protection, vers une position d'insertion (I), dans laquelle lesdits contacts électriques mobiles (9a, 9b) sont couplés avec lesdits contacts électriques fixes et ledit élément de panneau (5) se trouve dans ladite position de non-protection.
